(19)

Europäisches
Patentamt
European
Patent Office
Office européen
des brevets

(11) **EP 2 339 292 A1**

(12) **EUROPEAN PATENT APPLICATION**
published in accordance with Art. 153(4) EPC

(43) Date of publication:
**29.06.2011 Bulletin 2011/26**

(21) Application number: **09814636.8**

(22) Date of filing: **17.09.2009**

(51) Int Cl.:
**G01B 11/245** (2006.01)

(86) International application number:
**PCT/JP2009/066272**

(87) International publication number:
**WO 2010/032792 (25.03.2010 Gazette 2010/12)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **18.09.2008 JP 2008239114**

(71) Applicant: **Omron Corporation
Kyoto-shi, Kyoto 600-8530 (JP)**

(72) Inventors:
• **OHNISHI Yasuhiro
Kyoto-shi
Kyoto 600-8530 (JP)**

• **SUWA Masaki
Kyoto-shi
Kyoto 600-8530 (JP)**
• **ZHUANG, Tuo
Kyoto-shi
Kyoto 600-8530 (JP)**

(74) Representative: **Wilhelms · Kilian & Partner
Patentanwälte
Eduard-Schmid-Straße 2
81541 München (DE)**

(54) **THREE-DIMENSIONAL MEASUREMENT APPARATUS AND METHOD THEREOF**

(57) A three-dimensional measurement apparatus includes: a plurality of cameras; feature obtaining means for obtaining from respective captured images a normal direction serving as a physical feature of a surface of a measurement object; corresponding pixel retrieving means for retrieving corresponding pixels of the images using the physical feature; and measuring means for performing a three-dimensional measurement on a basis of a parallax between the corresponding pixels. Coordinate transforming means for transforming the normal direction at each image into a common coordinate system is preferably provided. A parameter of the coordinate transformation may be calculated from a parameter obtained during a camera calibration. This three dimensional measurement apparatus can measure a three-dimensional shape of a mirror surface object precisely without being affected by differences in positions and characteristics of the cameras.

Fig. 2

EP 2 339 292 A1

**Description**

Technical Field

The present invention relates to a technique for measuring a three-dimensional shape of a measurement object, and particularly a measurement object having a mirror surface.

Background Art

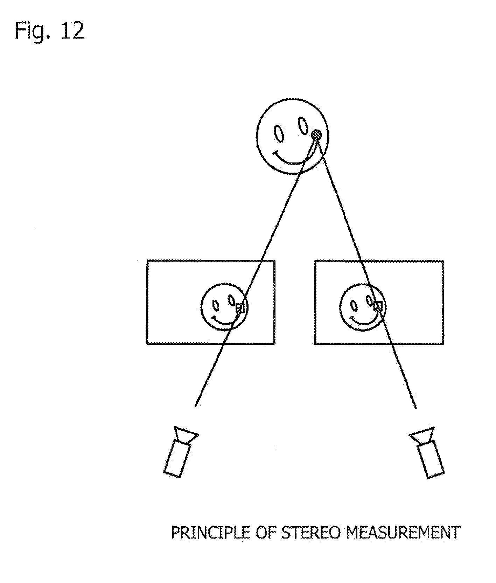

As shown in Fig. 12, three-dimensional measurement (triangulation) is a technique for measuring a distance by determining correspondence relationships between pixels of images captured by a plurality of cameras at different image pickup angles and calculating a parallax between the pixels. A luminance value is normally used as a feature value when determining corresponding pixels.

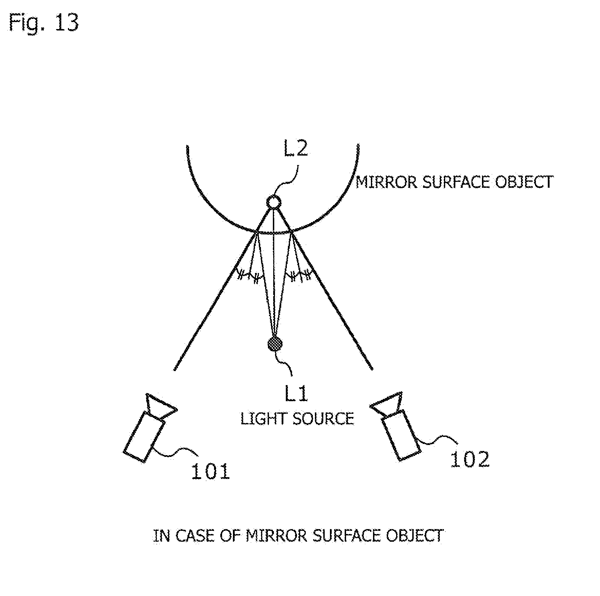

When a measurement object is a mirror surface object, the luminance values captured in the images, rather than expressing the feature value of the object surface itself, are determined by reflection of peripheral objects. Therefore, when a mirror surface object is photographed by two cameras 101, 102, as shown in Fig. 13, light emitted from a light source L1 is reflected by the object surface in different positions. When a three-dimensional measurement is performed using these points as corresponding pixels, a location of a point L2 in the drawing is actually measured, leading to an error. The error increases steadily as the difference between the image pickup angles of the cameras increases. Errors are also caused by differences in the characteristics of the cameras.

In a conventional three-dimensional measurement technique for eliminating the effect of an error caused by differences in the positions and characteristics of the cameras, a normal-line map is determined using an illumination difference stereo method, area division is performed using the normal-line map, and associations are formed in each area using average normal values (Patent Literature 1).

Citation List

Patent Literature 1: Japanese Patent Application Publication No. S61-198015

SUMMARY OF THE INVENTION

Problem to be solved

With a conventional technique such as that described above, however, the following problems arise.

When a conventional three-dimensional measurement method is applied to a mirror surface object using the luminance value as the feature value, the luminance values of the captured images are affected by differences in the characteristics of the plurality of cameras and the camera arrangement, and therefore errors occur in the pixel associations. When the surface of the measurement object is a mirror surface, this effect increases.

The method described in Patent Literature 1 focuses on the normal line, i.e. information that is unique to the measurement object, and thus errors caused by differences in the arrangement and characteristics of the cameras can be reduced, but an error occurs due to area division. With respect to a measurement object having a smooth continuous surface, such as a sphere, in particular, a surface resolution is roughened by the area division, and therefore the measurement object can only be measured as an angulated three-dimensional shape. Further, when determining associations, a convergence angle of the cameras is assumed to be small and the plurality of cameras are assumed to share an identical coordinate system. Therefore, when the convergence angle is enlarged, the precision of the associations deteriorates due to differences among the normal coordinate systems.

The present invention has been designed in consideration of the circumstances described above, and an object thereof is to provide a technique with which a three-dimensional shape of a mirror surface object can be measured precisely and without being affected by differences in camera positions and camera characteristics.

Means for Solving Problem

To achieve this object, a three-dimensional measurement apparatus according to the present invention is a three-dimensional measurement apparatus for measuring a three-dimensional shape of a measurement object which is a mirror surface object includes: a plurality of cameras; feature obtaining means for obtaining a physical feature of a surface of the measurement object from respective images captured by the plurality of cameras; corresponding pixel retrieving means for retrieving corresponding pixels of the images captured by the plurality of cameras using the physical feature; and measuring means for performing a three-dimensional measurement on a basis of a parallax between the corresponding pixels.

The reason why errors occur when pixel associations are formed using information relating to a luminance reflected on the surface of a mirror surface object is that the luminance information is not a feature of the surface of the mirror surface object itself, but rather information that varies according to conditions such as peripheral illumination. Hence, in the present invention, a physical feature of the surface of the mirror surface object is obtained and pixel associations are formed using this feature, and therefore high-precision matching can be performed without being affected by positions and attitudes of the cameras. As a result, the three-dimensional shape of the measurement object can be measured precisely.

A normal direction of the surface is preferably used as the physical feature of the surface of the measurement object. A spectral characteristic or a reflection characteristic of the measurement object surface may be used instead of the normal. These physical features are all information that is unique to the measurement object, and are not therefore affected by the positions and attitudes of the cameras.

In the present invention, coordinate transforming means for transforming coordinate systems of the images captured by the plurality of cameras into a common coordinate system using a transformation parameter are preferably further provided. In this case, the corresponding pixel retrieving means retrieves the corresponding pixels of the images using a normal direction transformed into the common coordinate system by the coordinate transforming means.

By performing matching after implementing coordinate transformation processing for unifying the coordinate systems of the plurality of captured images, the precision of the matching operation does not deteriorate even if a convergence angle of the cameras increases. As a result, the camera arrangement can be determined more flexibly.

Note that the transformation parameter used by the coordinate transforming means is preferably extracted from a parameter obtained during a camera calibration performed in advance.

Further, the corresponding pixel retrieving means according to the present invention preferably retrieves the corresponding pixels of the images by comparing the physical feature in an area of a predetermined size including a focus pixel. By performing the comparison including peripheral physical features, the precision of the matching operation can be improved even further.

Note that the present invention may be taken as a three-dimensional measurement apparatus having at least a part of the means described above. The present invention may also be taken as a three-dimensional measurement method including at least a part of the processing described above, and as a program for realizing this method. The present invention may be configured by as many combinations the means and processing described above as possible.

Advantageous Effect of Invention

According to the present invention, a three-dimensional shape of a mirror surface object can be measured precisely without being affected by differences in camera positions and camera characteristics.

BRIEF DESCRIPTION OF THE DRAWINGS

Fig. 1 is a view showing an outline of a three-dimensional measurement apparatus;
Fig. 2 is a view showing function blocks of the three-dimensional measurement apparatus;
Fig. 3 is a view illustrating a camera arrangement;
Fig. 4A is a view illustrating an azimuth angle arrangement of illumination apparatuses;
Fig. 4B is a view illustrating a zenith angle arrangement of the illumination apparatuses;
Fig. 5 is a view showing a function block diagram of a surface shape calculation unit;
Fig. 6 is a view illustrating a method of creating a normal-luminance table;
Fig. 7 is a view illustrating a method of obtaining a normal direction from a captured image;
Fig. 8 is a view illustrating a transformation matrix for performing transformations between a world coordinate system and respective camera coordinate systems;
Fig. 9 is a flowchart showing a flow of corresponding point retrieval processing performed by a corresponding point calculation unit;
Fig. 10A is a view illustrating a retrieval window used during corresponding point retrieval;
Fig. 10B is a view illustrating similarity calculation performed during corresponding point retrieval;

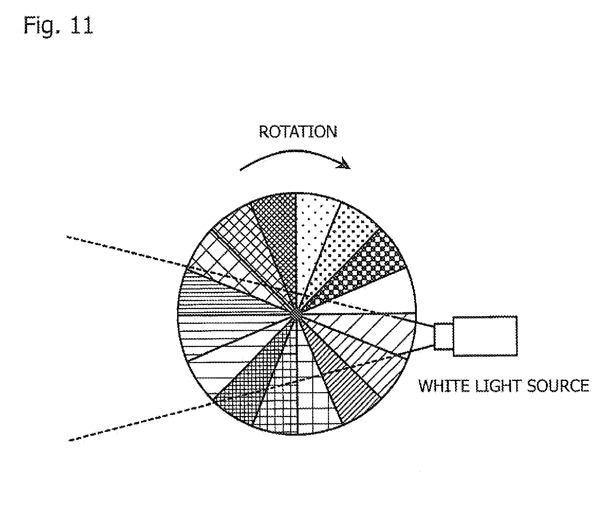

Fig. 11 is a view illustrating an illumination apparatus according to a second embodiment;
Fig. 12 is a view showing a principle of three-dimensional measurement; and
Fig. 13 is a view illustrating a case in which a three-dimensional measurement is performed on a mirror surface object.

DESCRIPTION OF EMBODIMENTS

Preferred embodiments of the present invention will be described in detail below as examples, with reference to the drawings.

(First Embodiment)

<Overall outline>

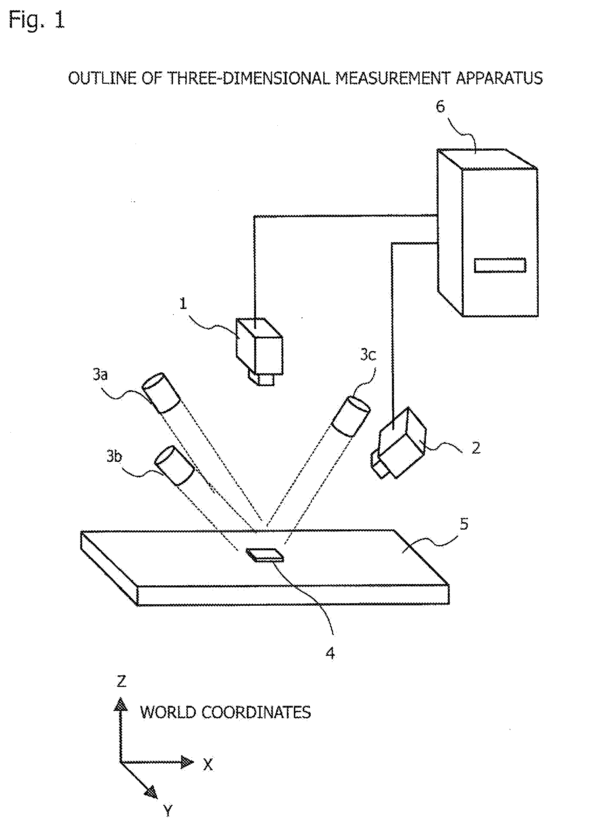

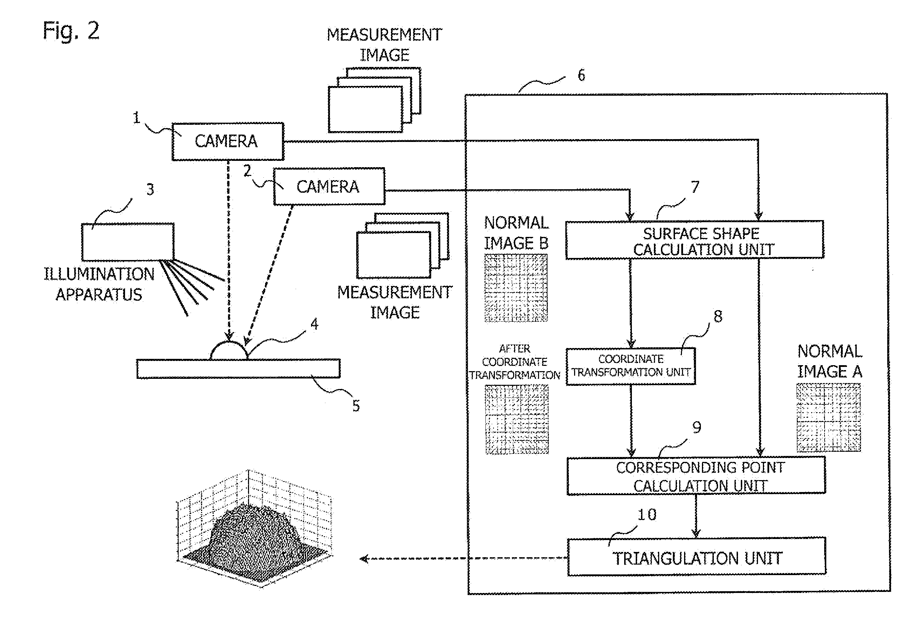

Fig. 1 is a view showing an outline of a three-dimensional measurement apparatus according to this embodiment. Fig. 2 is a view showing function blocks of the three-dimensional measurement apparatus according to this embodiment. As shown in Fig. 1, a measurement object 4 disposed on a stage 5 is photographed by two cameras 1, 2. The measurement object 4 is illuminated with white light from different directions by three illumination apparatus 3a to 3c. The illumination apparatuses 3a to 3c illuminate the measurement object 4 in sequence such that the cameras 1, 2 each capture three images. The captured images are fed into a computer 6 and subjected to image processing for the purpose of three-dimensional measurement.

As shown in Fig. 2, the computer 6 functions as a surface shape calculation unit 7, a coordinate transformation unit 8, a corresponding point calculation unit 9, and a triangulation unit 10 by having a CPU execute a program. Note that a part or all of these function units may be realized by dedicated hardware.

<Configuration>

[Camera arrangement]

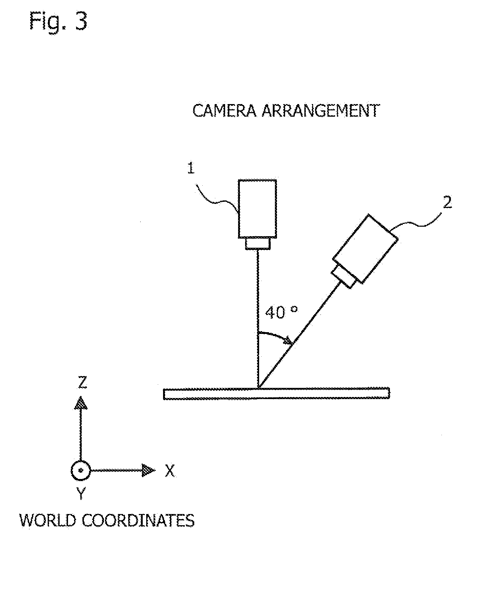

Fig. 3 is a view illustrating a camera arrangement. As shown in Fig. 3, the camera 1 photographs the measurement object 4 from a vertical direction, and the camera 2 photographs the measurement object 4 from a direction shifted 40 degrees from the vertical direction.

[Illumination arrangement]

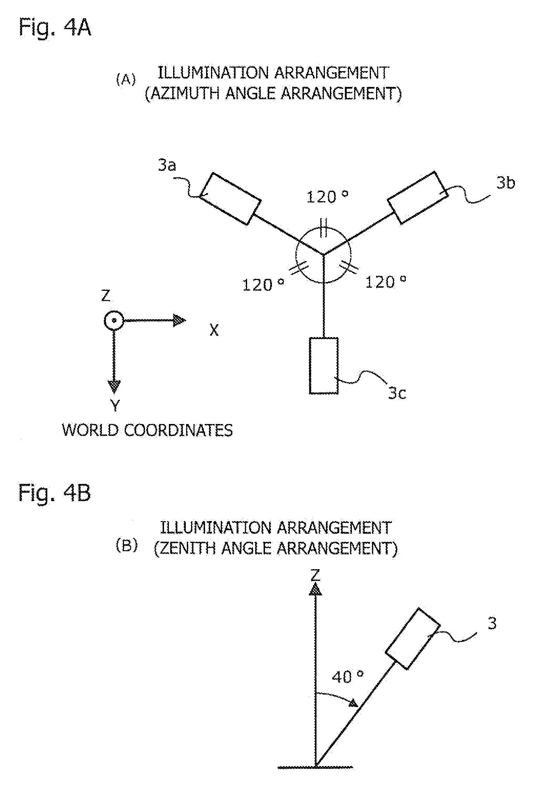

Fig. 4 is a view illustrating an arrangement of the illumination apparatuses 3a to 3c. Fig. 4A is a view seen from the vertical direction, showing an azimuth angle arrangement of the illumination apparatuses 3a to 3c, and Fig. 4B is a view seen from a horizontal direction, showing a zenith angle arrangement of the illumination apparatuses 3a to 3c. As shown in the drawings, the three illumination apparatuses 3a to 3c irradiate the measurement object with light from directions differing respectively by azimuth angles of 120 degrees and from a direction having a zenith angle of 40 degrees.

Note that the arrangements of the cameras 1, 2 and the illumination apparatuses 3a to 3c described here are merely specific examples, and these arrangements do not necessarily have to be employed. For example, the azimuth angles of the illumination apparatuses do not have to be equal. Further, here, the cameras and illumination apparatuses have identical zenith angles, but the zenith angles thereof may be different.

[Surface shape (normal) calculation]

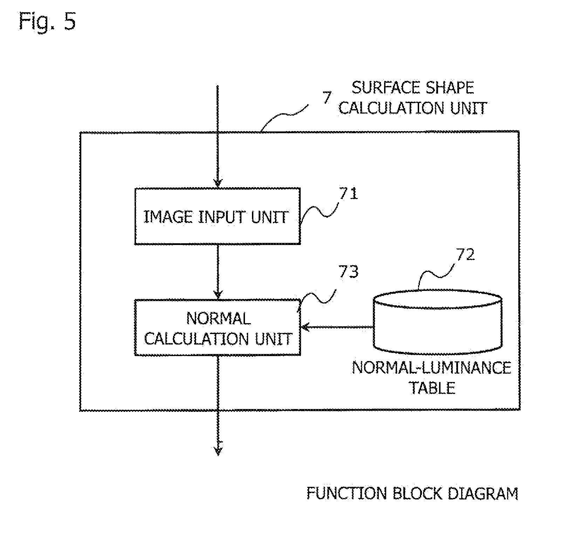

The surface shape calculation unit 7 is a function unit for calculating a normal direction in each position of the measurement object from the three images captured by each of the cameras 1, 2. Fig. 5 is a function block diagram showing the surface shape calculation unit 7 in more detail. As shown in the drawing, the surface shape calculation unit 7 includes an image input unit 71, a normal-luminance table 72, and a normal calculation unit 73.

The image input unit 71 is a function unit for receiving input of an image captured by the cameras 1, 2. Upon reception of analog data from the cameras 1, 2, the image input unit 71 converts the received analog data into digital data using a capture board or the like. The image input unit 71 may also receive digital data images using a USB terminal, an IEEE1394 terminal, or the like. Alternatively, the image input unit 71 may be configured to read an image from a LAN cable, a portable storage medium, or the like.

The normal-luminance table 72 is a storage unit that stores correspondence relationships between the normal directions and the luminance values of the images captured while illuminating the three illumination apparatuses 3a to 3c in sequence. Note that the normal-luminance table 72 is prepared for each camera, and in this embodiment, two normal-luminance tables are used in accordance with the cameras 1, 2.

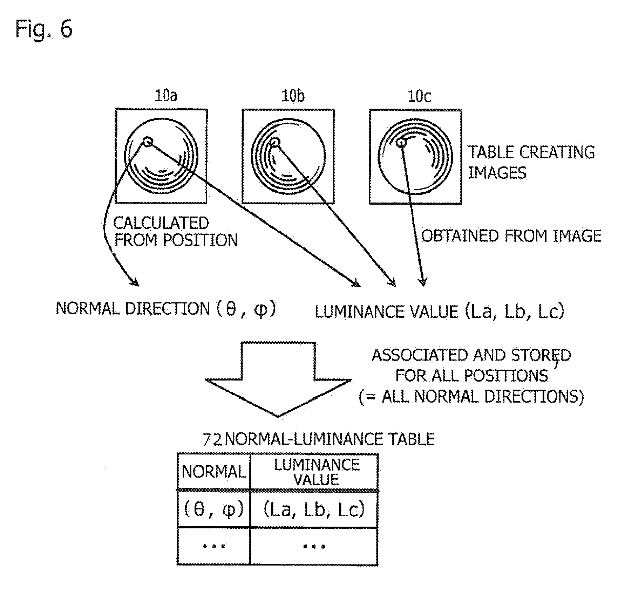

A method of creating the normal-luminance table 72 will now be described with reference to Fig. 6. First, using an object having a known surface shape as a subject, three images 10a to 10c are captured while illuminating the illumination apparatuses 3a to 3c in sequence. Here, a spherical object is preferably used as the subject since a sphere has a normal in all directions and the normal direction in each position can be calculated easily. Further, the subject used to create the normal-luminance table and an actual measurement object on which normal calculation is to be implemented must have identical and fixed reflection characteristics.

The normal direction (a zenith angle θ and an azimuth angle φ) and a luminance value (La, Lb, Lc) of each image are then obtained in relation to each position of the table creation images 10a to 10c, whereupon the obtained normal directions and luminance values are stored in association. By associating combinations of the normal direction and the luminance value in all points of the captured images, the normal-luminance table 72 can be created to store combinations of the normal direction and the luminance value in relation to all normal directions.

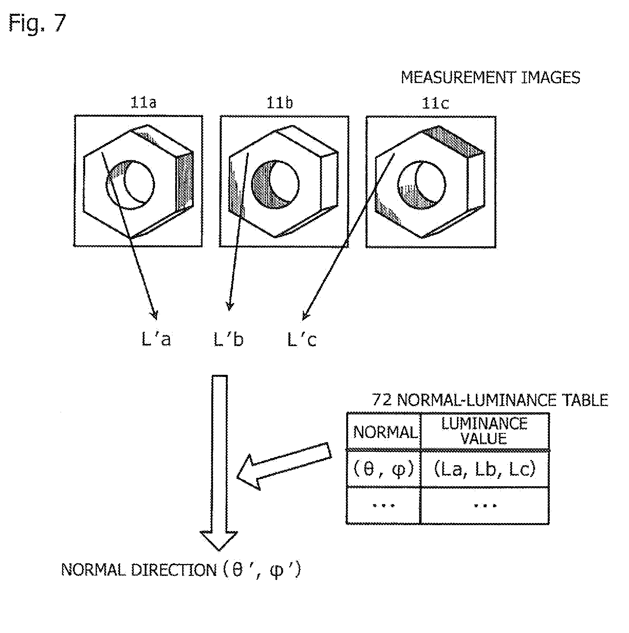

As shown in Fig. 7, the normal calculation unit 73 calculates the normal direction in each position of the measurement obj ect 4 from three images 11a to 11c captured while illuminating the illumination devices 3a to 3c in sequence. More specifically, the normal calculation unit 73 obtains combinations of the luminance values in each position from the three input images 11a to 11c, and determines the normal direction of each position by referring to the normal-luminance table 72 corresponding to the camera that captured the image.

[Coordinate transformation processing]

The coordinate transformation unit 8 uses coordinate transformation processing to represent the normal directions calculated from the images captured by the cameras 1, 2 on a unified coordinate system. The normal directions obtained from the images captured by the cameras 1, 2 are expressed by respective camera coordinate systems, and therefore an error occurs when the normal directions are compared as is. This error becomes particularly large when a difference in image pickup directions of the cameras is large.

In this embodiment, the coordinate systems are unified by transforming the normal directions obtained from the images captured by the camera 2, which captures images from an upper diagonal location, into the coordinate system of the camera 1. Note, however, that the coordinate systems may be unified by transforming the normal directions obtained from the images captured by the camera 1 into the coordinate system of the camera 2, or by transforming the normal directions obtained from the images captured by the cameras 1, 2 into a different coordinate system.

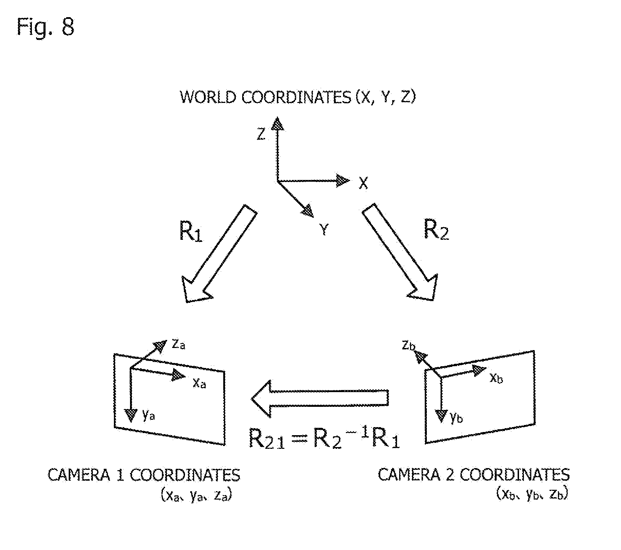

As shown in Fig. 8, when a camera model according to this embodiment is set as an orthograph, a rotation matrix for transforming a world coordinate system (X, Y, Z) into the coordinate system $(x_a, y_a, z_a)$ of the camera 1 is set as $R_1$, and a rotation matrix for transforming the world coordinate system (X, Y, Z) into the coordinate system $(x_b, y_b, z_b)$ of the camera 2 is set as $R_2$, a rotation matrix $R_{21}$ for transforming the coordinate system of the camera 2 into the coordinate system of the camera 1 is $R_{21} = R_2^{-1} \cdot R_1$.

Further, in a camera calibration performed in advance, a calibration parameter such as the following is obtained.

[Equation 1]

$$\begin{pmatrix} x_1 \\ y_1 \\ x_2 \\ y_2 \end{pmatrix} = cP \begin{pmatrix} X \\ Y \\ Z \\ 1 \end{pmatrix} = c\lambda \begin{bmatrix} p_{a11} & p_{a12} & p_{a13} & p_{a14} \\ p_{a21} & p_{a22} & p_{a23} & p_{a24} \\ p_{b11} & p_{b12} & p_{b13} & p_{b14} \\ p_{b21} & p_{b22} & p_{b23} & p_{b24} \end{bmatrix} \begin{pmatrix} X \\ Y \\ Z \\ 1 \end{pmatrix}$$

Note that $x_1$, $y_1$ represent coordinates within the image captured by the camera 1, and $x_2$, $y_2$ represent coordinates within the image captured by the camera 2.

The rotation matrix R is typically expressed as follows.

[Equation 2]

$$R = \begin{bmatrix} R_{11} & R_{12} & R_{13} \\ R_{21} & R_{22} & R_{23} \\ R_{31} & R_{32} & R_{33} \end{bmatrix} = \begin{bmatrix} \cos\lambda & -\sin\lambda & 0 \\ \sin\lambda & \cos\lambda & 0 \\ 0 & 0 & 1 \end{bmatrix} \begin{bmatrix} \cos\beta & 0 & \sin\beta \\ 0 & 1 & 0 \\ -\sin\beta & 0 & \cos\beta \end{bmatrix} \begin{bmatrix} 1 & 0 & 0 \\ 0 & \cos\alpha & -\sin\alpha \\ 0 & \sin\alpha & \cos\alpha \end{bmatrix}$$

$$= \begin{bmatrix} \cos\beta\cos\gamma & -\cos\alpha\sin\gamma + \sin\alpha\sin\beta\cos\lambda & \sin\alpha\sin\gamma + \cos\alpha\sin\beta\cos\lambda \\ \cos\beta\sin\gamma & \cos\alpha\cos\gamma + \sin\alpha\sin\beta\sin\lambda & -\sin\alpha\cos\gamma + \cos\alpha\sin\beta\sin\lambda \\ -\sin\beta & \sin\alpha\cos\beta & \cos\alpha\cos\beta \end{bmatrix}$$

In Equation 1, $p_{a11}$, $p_{a12}$, $p_{a13}$, $p_{a21}$, $p_{a22}$, $p_{a23}$ are respectively equal to $R_{1\_11}$, $R_{1\_12}$, $R_{1\_13}$, $R_{1\_21}$, $R_{1-22}$, $R_{1\_23}$ in the rotation matrix $R_1$, and therefore rotation angles $\alpha$, $\beta$, $\gamma$ of the camera can be determined by solving a simultaneous equation, whereby the rotation matrix $R_1$ can be obtained. The rotation matrix $R_2$ can be obtained in a similar manner with regard to the camera 2. The rotation matrix $R_{21}$ for transforming the coordinate system of the camera 2 into the coordinate system of the camera 1 can then be determined from $R_2^{-1} \cdot R_1$.

[Corresponding point retrieval processing]

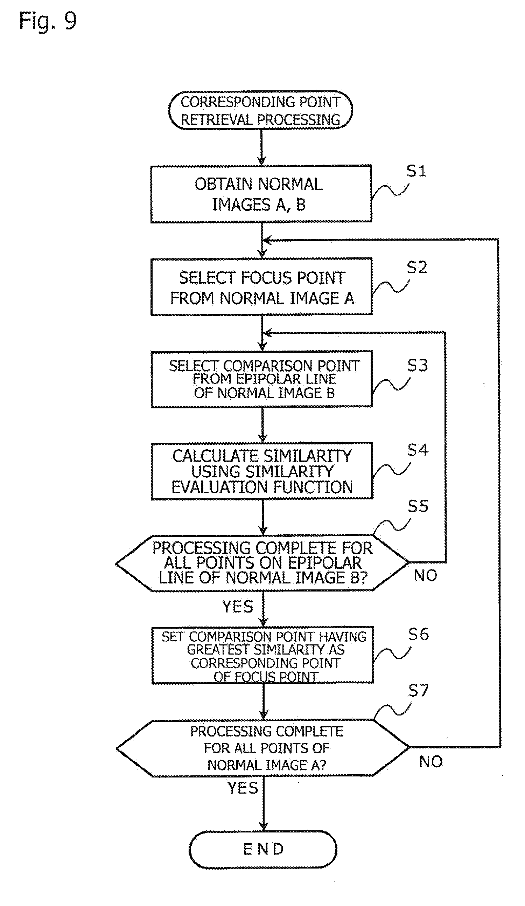

The corresponding point calculation unit 9 calculates corresponding pixels from the two normal images having a unified coordinate system. This processing is performed by determining a normal having an identical direction to the normal of a focus pixel in the normal image of the camera 1 from the normal image of the camera 2. The processing performed by the corresponding point calculation unit 9 will now be described with reference to a flowchart shown in Fig. 9.

First, the corresponding point calculation unit 9 obtains two normal images A, B having a unified coordinate system (S1). Here, an image obtained from the surface shape calculation unit 7 is used as is as the normal image A obtained from the image of the camera 1, whereas an image transformed to the coordinate system of the camera 1 by the coordinate transformation unit 8 is used as the normal image B obtained from the image of the camera 2.

Next, an arbitrary pixel in one of the normal images (assumed to be the normal image A here) is selected as a focus point (a focus pixel) (S2). A comparison point is then selected from an epipolar line of the other normal image (the normal image B here) (S3).

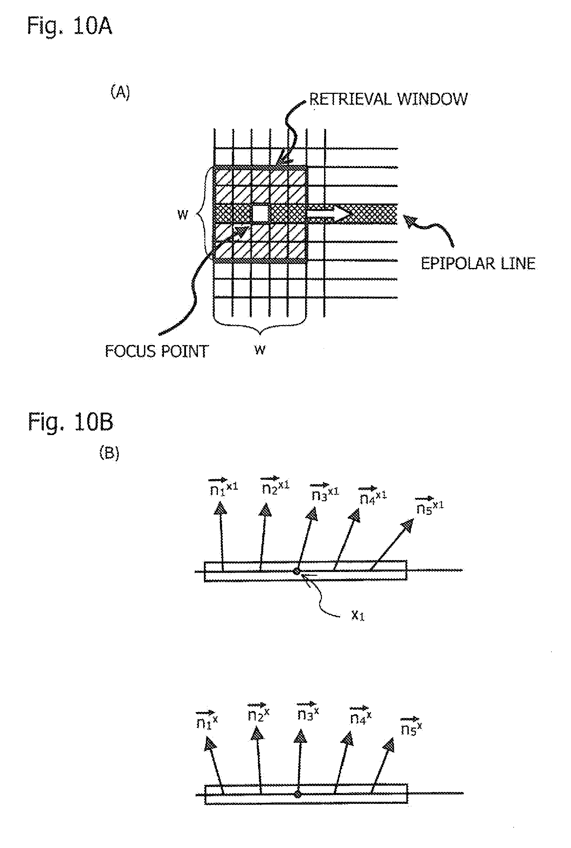

A similarity between the focus point of the normal image A and the comparison point of the normal image B is then calculated using a similarity evaluation function (S4). Here, an erroneous determination may occur if the normal directions are compared at a single point, and therefore the similarity is calculated using the normal directions of pixels on the periphery of the focus point and comparison point as well. Fig. 10A shows an example of a retrieval window used to calculate the similarity. Here, an area of 5 pixels x 5 pixels centering on the focus point is used as the retrieval window.

The similarity between the focus point and the comparison point is calculated on the basis of an agreement rate of all of the normal directions within the retrieval window. More specifically, an inner product of a normal vector is calculated between the normal images A, B at each point in the retrieval window using a following equation, and the similarity is calculated on the basis of a sum of the inner products (see Fig. 10B).

[Equation 3]

$$E_{x1}(x) = \frac{\displaystyle\sum_{i}^{w}\sum_{j}^{w}(\vec{n}_{i,j,x1} \cdot \vec{n}_{i,j,x})}{w^2}$$

The corresponding point is on the epipolar line, and therefore the similarity calculation is performed in relation to pixels on the epipolar line. Hence, after calculating the similarity with regard to one point, a determination is made as to whether or not the similarity calculation processing has been executed in relation to all of the points on the epipolar line, and if a point for which the similarity has not yet been calculated exists, the routine returns to the step S3, where the similarity calculation is performer again (S5).

When the similarity has been calculated in relation to all of the points on the epipolar line, a point having the greatest similarity is determined, whereupon this point is determined to be a corresponding point of the normal image B corresponding to the focus point of the normal image A (S6).

The processing described above is performed on every point of the normal image A subjected to triangulation, and therefore a determination is made as to whether or not the processing has been performed on every point. When an unprocessed point exists, the routine returns to the step S2, where a corresponding point corresponding to this point is retrieved (S7).

[Triangulation]

Once the corresponding points of the two images have been determined in the manner described above, the triangulation unit 10 calculates depth information (a distance) in relation to each position of the measurement object 4. A well known technique is employed for this processing, and therefore detailed description has been omitted.

<Actions and effects of this embodiment>

With the three-dimensional measurement apparatus according to this embodiment, corresponding points between two images are retrieved using a normal direction as a physical feature of the measurement object, and therefore three-dimensional measurement can be performed without being affected by differences in the characteristics and arrangement of the cameras. In conventional corresponding point retrieval processing based on a color (luminance value) of a physical surface, an error increases in a case where the subject surface is a mirror surface, making precise three-dimensional measurement difficult. However, when the method according to this embodiment is used, three-dimensional measurement can be performed precisely even on a mirror surface object.

Further, the corresponding points are retrieved after transforming the different coordinate systems of the plurality of cameras into a common coordinate system using a transformation parameter extracted from a calibration parameter obtained during camera calibration, and therefore three-dimensional measurement can be performed precisely without a reduction in the precision of the associations even if a convergence angle of the cameras is large.

(First modified example)

In the above embodiment, the normal direction is calculated from the image captured by the camera 2 by referring to the normal-luminance table, whereupon the coordinate system of the normal image is aligned with the coordinate system of the camera 1 through coordinate transformation. However, as long as the coordinate systems are ultimately unified, other methods may be employed. For example, transformation processing for aligning the coordinate system of the camera 2 with the coordinate system of the camera 1 may be implemented on the normal data stored in the normal-luminance table corresponding to the camera 2. In so doing, normal direction calculation results obtained by the surface shape calculation unit 7 in relation to the image of the camera 2 are expressed by the coordinate system of the camera 1.

(Second modified example)

In the above embodiment, images are captured by illuminating the three illumination apparatuses 3a to 3c that emit white light in sequence, and the normal directions are calculated from the three images. However, any method of capturing images and obtaining normal directions therefrom may be employed. For example, by setting colors of the light emitted respectively by the three illumination apparatuses as R, G, B, emitting light in these three colors simultaneously, and obtaining an intensity of each component light, similar effects to those described above can be obtained in a single image pickup operation.

(Second Embodiment)

In the first embodiment, the normal direction is used as the physical feature of the measurement object surface, but in this embodiment, corresponding points between stereo images are retrieved using a spectral characteristic of the subject.

To measure the spectral characteristic of the measurement object surface, the measurement object is illuminated in sequence by light sources having different spectral characteristics from identical positions. As shown in Fig. all, this can be realized by providing a color filter that exhibits different spectral characteristics according to location (angle) in front of a white light source and rotating the filter. By observing the subject through the color filter using this type of illumination apparatus and measuring the luminance value having the highest value, a simple spectral characteristic can be calculated for each pixel.

Associations are then formed using a spectral characteristic map for each pixel obtained from the plurality of cameras. Subsequent processing is similar to that of the first embodiment.

(Third Embodiment)

In this embodiment, corresponding points between stereo images are retrieved using a reflection characteristic as the physical feature of the measurement object surface.

To measure the reflection characteristic of the measurement object surface, a plurality of light sources that emit light from different directions are disposed, and image pickup is performed by the cameras while illuminating these light sources in sequence. Further, similarly to the first embodiment, a sample having a known shape and a know reflection characteristic, such as a sphere, is prepared in advance. Here, a plurality of samples having different reflection characteristics are used, and luminance values of the respective samples under each light source are stored as example data.

The measurement object is then illuminated similarly by the plurality of light sources in sequence, whereby luminance value combinations under the respective light sources are obtained. The luminance values are then combined and compared with the example data to calculate a corresponding reflection characteristic for each pixel.

Pixel associations are then formed between the images captured by the plurality of cameras using a reflection characteristic map for each pixel obtained from the plurality of cameras. Subsequent processing is similar to that of the first embodiment.

REFERENCE SIGN LIST

| 1, 2 | camera |
| 3a, 3b, 3c | illumination apparatus |
| 4 | measurement object |
| 6 | computer |
| 7 | surface shape calculation unit |
| 71 | image input unit |
| 72 | normal-luminance table |
| 73 | normal calculation unit |
| 8 | coordinate transformation unit |
| 9 | corresponding point calculation unit |
| 10 | triangulation unit |

**Claims**

1. A three-dimensional measurement apparatus for measuring a three-dimensional shape of a measurement object which is a mirror surface object, comprising:

a plurality of cameras;
feature obtaining means for obtaining a physical feature of a surface of the measurement object from respective images captured by the plurality of cameras;
corresponding pixel retrieving means for retrieving corresponding pixels of the images captured by the plurality of cameras using the physical feature; and
measuring means for performing a three-dimensional measurement on a basis of a parallax between the corresponding pixels.

2. The three-dimensional measurement apparatus according to claim 1, **characterized in that** the physical feature of the surface of the measurement object obtained by the feature obtaining means is a normal direction of the surface.

3.   The three-dimensional measurement apparatus according to claim 2, **characterized by** further comprising coordinate transforming means for transforming coordinate systems of the images captured by the plurality of cameras into a common coordinate system using a transformation parameter,
wherein the corresponding pixel retrieving means retrieves the corresponding pixels of the images using a normal direction transformed into the common coordinate system by the coordinate transforming means.

4.   The three-dimensional measurement apparatus according to claim 3, **characterized in that** the transformation parameter used by the coordinate transforming means is extracted from a parameter obtained during a camera calibration performed in advance.

5.   The three-dimensional measurement apparatus according to any one of claims 1 to 4, **characterized in that** the corresponding pixel retrieving means retrieves the corresponding pixels of the images by comparing the physical feature in an area of a predetermined size including a focus pixel.

6.   A three-dimensional measurement method for measuring a three-dimensional shape of a measurement object which is a mirror surface object, comprising:

a feature acquisition step for obtaining a physical feature of a surface of the measurement object from respective images captured by a plurality of cameras;
a corresponding pixel retrieval step for retrieving corresponding pixels of the images captured by the plurality of cameras using the physical feature; and
a measurement step for performing a three-dimensional measurement on a basis of a parallax between the corresponding pixels.

7.   The three-dimensional measurement method according to claim 6, **characterized in that** the physical feature of the surface of the measurement object obtained in the feature acquisition step is a normal direction of the surface.

8.   The three-dimensional measurement method according to claim 7, **characterized by** further comprising a coordinate transformation step for transforming coordinate systems of the images captured by the plurality of cameras into a common coordinate system using a transformation parameter,
wherein, in the corresponding pixel retrieval step, the corresponding pixels of the images are retrieved using a normal direction transformed into the common coordinate system in the coordinate transformation step.

9.   The three-dimensional measurement method according to claim 8, **characterized in that** the transformation parameter used in the coordinate transformation step is extracted from a parameter obtained during a camera calibration performed in advance.

10.   The three-dimensional measurement method according to any one of claims 6 to 9, **characterized in that** in the corresponding pixel retrieval step, the corresponding pixels of the images are retrieved by comparing the physical feature in an area of a predetermined size including a focus pixel.

Fig. 1

OUTLINE OF THREE-DIMENSIONAL MEASUREMENT APPARATUS

Z

WORLD COORDINATES

X

Y

Fig. 2

CAMERA

CAMERA

ILLUMINATION APPARATUS

MEASUREMENT IMAGE

MEASUREMENT IMAGE

SURFACE SHAPE CALCULATION UNIT

COORDINATE TRANSFORMATION UNIT

CORRESPONDING POINT CALCULATION UNIT

TRIANGULATION UNIT

NORMAL IMAGE A

NORMAL IMAGE B

AFTER COORDINATE TRANSFORMATION

Fig. 3

CAMERA ARRANGEMENT

WORLD COORDINATES

Fig. 4A

(A)  ILLUMINATION ARRANGEMENT
(AZIMUTH ANGLE ARRANGEMENT)

3a

3b

120°

120°

120°

Z

X

Y

3c

WORLD COORDINATES

Fig. 4B

(B)  ILLUMINATION ARRANGEMENT
(ZENITH ANGLE ARRANGEMENT)

Z

3

40°

Fig. 5

7  SURFACE SHAPE
CALCULATION UNIT

IMAGE INPUT UNIT  71

73  NORMAL
CALCULATION UNIT

72

NORMAL-LUMINANCE
TABLE

FUNCTION BLOCK DIAGRAM

Fig. 6

10a 10b 10c

TABLE CREATING
IMAGES

CALCULATED
FROM POSITION

OBTAINED FROM IMAGE

NORMAL DIRECTION (θ, φ)     LUMINANCE VALUE (La, Lb, Lc)

ASSOCIATED AND STORED
FOR ALL POSITIONS
(= ALL NORMAL DIRECTIONS)

72 NORMAL-LUMINANCE TABLE

| NORMAL | LUMINANCE VALUE |
|--------|-----------------|
| (θ, φ) | (La, Lb, Lc) |
| . . . | . . . |

Fig. 7

MEASUREMENT IMAGES

11a     11b     11c

L'a    L'b    L'c

72 NORMAL-LUMINANCE TABLE

| NORMAL | LUMINANCE VALUE |
|---|---|
| $(\theta, \varphi)$ | $(La, Lb, Lc)$ |
| ... | ... |

NORMAL DIRECTION $(\theta', \varphi')$

Fig. 8

WORLD COORDINATES (X, Y, Z)

$R_1$

$R_2$

$R_{21} = R_2^{-1} R_1$

CAMERA 1 COORDINATES
$(x_a, y_a, z_a)$

CAMERA 2 COORDINATES
$(x_b, y_b, z_b)$

Fig. 9

Fig. 10A

(A)

RETRIEVAL WINDOW

W

W

FOCUS POINT

EPIPOLAR LINE

Fig. 10B

(B)

$\vec{n_1}^{x1}$  $\vec{n_2}^{x1}$  $\vec{n_3}^{x1}$  $\vec{n_4}^{x1}$  $\vec{n_5}^{x1}$

$x_1$

$\vec{n_1}^{x}$  $\vec{n_2}^{x}$  $\vec{n_3}^{x}$  $\vec{n_4}^{x}$  $\vec{n_5}^{x}$

Fig. 11

ROTATION

WHITE LIGHT SOURCE

Fig. 12

PRINCIPLE OF STEREO MEASUREMENT

Fig. 13

L2

MIRROR SURFACE OBJECT

L1
LIGHT SOURCE

101

102

IN CASE OF MIRROR SURFACE OBJECT

**INTERNATIONAL SEARCH REPORT**

| | International application No. |
|---|---|
| | PCT/JP2009/066272 |

A. CLASSIFICATION OF SUBJECT MATTER
*G01B11/245*(2006.01)i

According to International Patent Classification (IPC) or to both national classification and IPC

B. FIELDS SEARCHED

Minimum documentation searched (classification system followed by classification symbols)
G01B11/00-11/30

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 61-198015 A (Director General, Agency of Industrial Science and Technology), 02 September 1986 (02.09.1986), page 2, upper right column, line 11 to page 3, lower right column, line 15; fig. 1 to 4 (Family: none) | 1,2,5-7,10 |
| A | JP 2007-322162 A (3D Media Co., Ltd.), 13 December 2007 (13.12.2007), entire text; fig. 1 to 3 (Family: none) | 1-10 |
| A | JP 2007-114168 A (Applied Vision Systems Corp.), 10 May 2007 (10.05.2007), entire text; fig. 1 to 10 (Family: none) | 1-10 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 November, 2009 (02.11.09) | 10 November, 2009 (10.11.09) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

International application No.

PCT/JP2009/066272

C (Continuation).    DOCUMENTS CONSIDERED TO BE RELEVANT

| Category* | Citation of document, with indication, where appropriate, of the relevant passages | Relevant to claim No. |
|---|---|---|
| A | JP 4-143606 A (Kobe Steel, Ltd.),<br>18 May 1992 (18.05.1992),<br>entire text; fig. 1 to 10<br>(Family: none) | 1-10 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61198015 B